# EUROPEAN PATENT APPLICATION

(11) **EP 4 093 040 A1**
(43) Date of publication of application: **23.11.2022**
(21) Application number: 21741678.3
(22) Date of filing: 13.01.2021
(51) Int. Cl.: H04N 21/433, H04N 21/44, H04N 21/485, H04N 21/647, H04N 21/239

(54) **VIDEO PLAYBACK METHOD AND APPARATUS**

(30) Priority: 17.01.2020 CN 202010055828
(71) Applicant: Beijing Dajia Internet Information Technology Co., Ltd., Beijing 100085 (CN)
(72) Inventor: LI, Jinhai, Beijing 100085 (CN); CANG, Peng, Beijing 100085 (CN); SHUAI, Longcheng, Beijing 100085 (CN); WANG, Tao, Beijing 100085 (CN); LIU, Yuxin, Beijing 100085 (CN); JIANG, Pengcheng, Beijing 100085 (CN)
(74) Representative: Angerhausen, Christoph
(86) International application number: PCT/CN2021/071562
(87) International publication number: WO 2021/143735

(57) **Abstract**

The present disclosure relates to a video playback method and apparatus. Said method comprises: in response to detecting that a target client displays a preset page, acquiring first configuration information of at least one target video associated with the preset target video and local buffering information of the target client, the first configuration information comprising identifier information of the target client; according to the first configuration information and the local buffering information, determining a video buffering sate of the target client, the video buffering state being used to indicate a buffering progress of the target client for the at least one target video; downloading, according to the video buffering state, at least one target video of which the buffering has not been completed; and in response to a user operation, playing back the at least one target video. Thus, pre-buffering of a video is achieved, reducing the probability of a video stutter during a playback process, allowing smooth and clear viewing of network videos on clients.

## Description

### CROSS-REFERENCE TO RELATED APPLICATION

This application claims priority to Chinese Patent Application No. 202010055828.2, filed by BEIJING DAJIA INTERNET INFORMATION TECHNOLOGY CO., LTD. on January 17, 2020, and titled with "method and apparatus for video playing, electronic device and storage medium".

### TECHNICAL FIELD

The present disclosure relates to the field of audio and video technologies, and in particular, to a method and an apparatus for video playing.

### BACKGROUND

At present, with the development of broadband networks, online video-on-demand has become a trend, which can access the network to provide users with a richer playing experience. However, if a large number of clients flood into online video-on-demand instantaneously, it will put pressure on network bandwidth and cause network video freezes, making it impossible for clients to watch online video smoothly and clearly.

### SUMMARY

The present disclosure provides a method and an apparatus for video playing. The technical solutions of the present disclosure are as follows.

According to some embodiments of the present disclosure, a method for video playing is provided. The method includes:
in response to detecting that a target client displays a preset page, obtaining first configuration information of at least one target video associated with the preset page and local cache information of the target client, wherein the first configuration information includes identification information of the target video, and the local cache information of the target client includes identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

According to some embodiments of the present disclosure, another method for video playing is provided. The method includes:
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

According to some embodiments of the present disclosure, an apparatus for video playing is provided. The apparatus includes:
an obtaining unit, configured to, in response to detecting that a target client displays a preset page, obtain first configuration information of at least one target video associated with the preset page and local cache information of the target client, wherein the first configuration information includes identification information of the target video, and the local cache information of the target client includes identification information of a video that has been cached by the target client;
a first determining unit, configured to determine a video cache state of the target client according to the first configuration information and the local cache information, wherein the video cache state is configured to indicate a cache progress of the at least one target video by the target client;
a downloading unit, configured to download at least one target video whose caching is not completed according to the video cache state;
a playing unit, configured to, in response to a user operation, play the at least one target video.

According to some embodiments of the present disclosure, another apparatus for video playing is provided. The apparatus includes:
a grouping unit, configured to determine at least one target client by grouping at least one client according to client information of the at least one client and network state information of a server;
a sending unit, configured to send time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

According to some embodiments of the present disclosure, a client is provided. The client includes: a processor; and a memory, configured to store instructions executable by the processor. The processor is configured to execute the instructions, to implement steps of:
in response to detecting that a target client displays a preset page, obtaining first configuration information of at least one target video associated with the preset page and local cache information of the target client, wherein the first configuration information includes identification information of the target video, and the local cache information of the target client includes identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

According to some embodiments of the present disclosure, a server is provided. The server includes: a processor; and a memory, configured to store instructions executable by the processor. The processor is configured to execute the instructions, to implement steps of:
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

According to some embodiments of the present disclosure, a storage medium is provided. When instructions in the storage medium are executed by a processor of a client, the client is enabled to implement steps of:
in response to detecting that a target client displays a preset page, obtaining first configuration information of at least one target video associated with the preset page and local cache information of the target client, wherein the first configuration information includes identification information of the target video, and the local cache information of the target client includes identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

According to some embodiments of the present disclosure, another storage medium is provided. When instructions in the storage medium are executed by a processor of a server, the server is enabled to implement steps of:
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

It is to be understood that the foregoing general description and the following detailed description are exemplary and explanatory only and are not restrictive of the present disclosure.

### BRIEF DESCRIPTION OF THE DRAWINGS

The accompanying drawings, which are incorporated in and constitute a part of this specification, illustrate embodiments consistent with the present disclosure, and together with the description, serve to explain the principles of the present disclosure and do not unduly limit the present disclosure.
FIG. 1 is a schematic diagram of an application environment of a method for video playing according to an exemplary embodiment.
FIG. 2 is a flowchart of a method for video playing according to an exemplary embodiment.
FIG. 3 is a schematic diagram of a preset page according to an exemplary embodiment.
FIG. 4 is a flowchart of a method for video playing according to an exemplary embodiment.
FIG. 5 is a block diagram of an apparatus for video playing according to an exemplary embodiment.
FIG. 6 is a block diagram of an apparatus for video playing according to an exemplary embodiment.
FIG. 7 is a schematic diagram of an electronic device according to an exemplary embodiment.

### DETAILED DESCRIPTION

In order to enable ordinary skilled in the art to better understand the technical solutions in this disclosure, the technical solutions in embodiments of this disclosure will be clearly and completely described in combination with the attached drawings below.

It should be noted that terms "first", "second", etc., in the specification and claims of the disclosure and in the appended drawings are used to distinguish similar objects and need not be used to describe a particular order or sequence. It should be understood that the data so used are interchangeable, where appropriate, so that embodiments of this disclosure described here may be implemented in a sequence other than those illustrated or described here. The implementations described in the following embodiments do not represent all implementations consistent with this disclosure. Rather, they are merely examples of devices and methods consistent with some aspects of this disclosure as detailed in the attached claims. It should be noted that, all the embodiments of the present disclosure may be executed independently or in combination with other embodiments, which are not limited in the present disclosure.

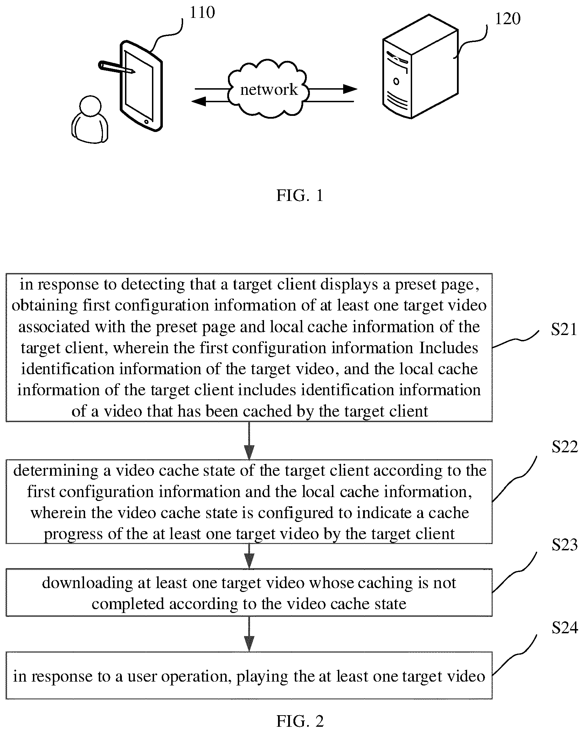

The method for video playing provided by the present disclosure can be applied to the application environment shown in FIG. 1. The client 110 interacts with the server 120 through the network. The client 110 may be, but is not limited to, various personal computers, notebook computers, smart phones, tablet computers and portable wearable devices, and the server 120 may be implemented by an independent server or a server cluster composed of multiple servers.

In response to detecting that the target client displays a preset page, the target client 110 obtains, from the server 120, first configuration information of at least one target video associated with the preset page and local cache information of the target client, in which the first configuration information includes identification information of the target video, and the local cache information of the target client includes identification information of a video that has been cached by the target client. The target client 110 determines a video cache state of the target client according to the first configuration information and the local cache information, in which the video cache state is configured to indicate a cache progress of at least one target video by the target client. The target client 110 downloads at least one target video whose caching is not completed according to the video cache state, and plays the at least one target video in response to a user operation.

FIG. 2 is a flowchart of a method for video playing according to an exemplary embodiment. As shown in FIG. 2, the method for video playing is applied in the client 110 shown in FIG. 1, and includes the following steps.

In step S21, in response to detecting that the target client displays a preset page, first configuration information of at least one target video associated with the preset page and local cache information of the target client are obtained. The first configuration information includes identification information of the target video, and the local cache information of the target client includes identification information of a video that has been cached by the target client.

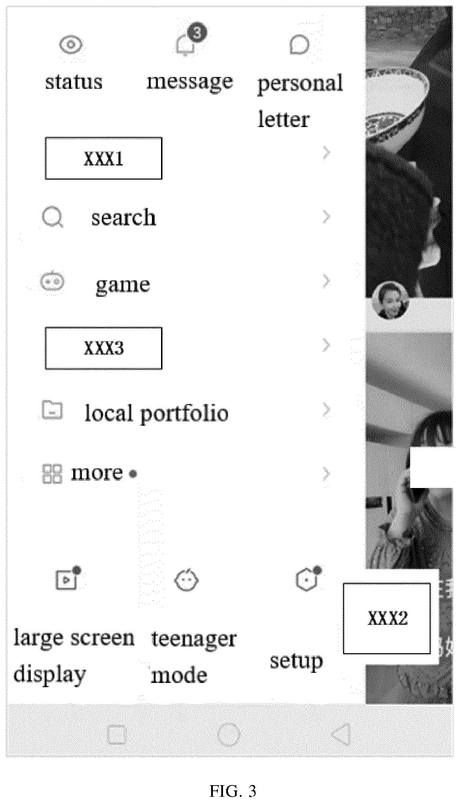

In embodiments of the present disclosure, an interface of the target client may include several video information components. The video information component is an interface component that displays information related to videos (including videos on preset pages and videos on non-preset pages). The content displayed by the component includes one or more pieces of video-related information, such as video-related text, hyperlinks, pictures, short overview videos, buttons, icons, etc. For ease of understanding, here is an example. As shown in the blocks of FIG. 3, "XXX1", "XXX2", "XXX3", etc. are all video information components. When the user clicks on a target video information component, the target client enters the preset page in response to the click operation, and obtains the first configuration information of at least one target video associated with the preset page and local cache information of the target client.

The first configuration information is pre-stored in the server, and the first configuration information obtained by each client (including the target client) is the same, and the first configuration information includes the identification information of the target video, and the identification information of the target video includes a video duration and a video name of the target video. The local cache information includes a video name and a video duration of the video that has been cached locally. The video name in the local cache information may be the same as or different from the video name in the first configuration information.

In step S22, a video cache state of the target client is determined according to the first configuration information and the local cache information. The video cache state is configured to indicate a cache progress of the at least one target video by the target client.

In embodiments of the present disclosure, the first configuration information and the local cache information may be matched. In some embodiments of the present disclosure, matching of the first configuration information and the local cache information may include: matching the video name in the first configuration information with the video name in the local cache information. If the matched video name A is stored, it means that the target client caches the video with the video name A under the preset page locally in advance. At this time, the video duration of the video with the video name A in the first configuration information may be compared with the video duration of the video with the video name A in the local cache information, so as to determine the local cached capacity of the video with the video name A (that is, whether the video has been fully cached or partially cached).

For ease of understanding, here is an example where the first configuration information includes the video name A and the corresponding duration of 2 minutes, and the local cache information includes the video name A and the corresponding duration of 1 minute. After matching the first configuration information and the local cache information, the video cache state of the video with the video name A under the preset page is determined as partially cached.

In step S23, at least one target video whose caching is not completed is downloaded according to the video cache state.

In embodiments of the present disclosure, the target client may continue to download at least one target video whose caching is not completed in the case of determining the video cache state.

In step S24, in response to a user operation, at least one target video is played.

In embodiments of the present disclosure, the user operation is an operation triggered by the user, and the user operation is configured to play the target video. For example, the user operation may be a click operation, a sliding operation, a selection operation, etc. triggered by the user.

In embodiments of the present disclosure, when the target client detects the user operation, it may play the above-mentioned at least one target video that has been downloaded and cached in response to the user operation.

As an application scenario, during a certain activity, a large number of clients may instantly flood into online video-on-demand. Therefore, in order to reduce network pressure, reduce the probability of freezing during video playing, and enable the client to watch online videos smoothly and clearly, some related activity videos can be pre-cached before the activity starts, so that when the activity starts, users can click and play the cached activity videos to improve the smoothness of video playing at the start of the activity.

In the above method for video playing, in response to detecting that the target client displays the preset page, the first configuration information of at least one target video associated with the preset page and local cache information of the target client are obtained, wherein the first configuration information includes the identification information of the target video, and the local cache information of the target client includes the identification information of the video that has been cached by the target client. The video cache state of the target client is determined according to the first configuration information and the local cache information, in which the video cache state is configured to indicate the cache progress of at least one target video by the target client. The target client downloads at least one target video whose caching has not been completed according to the video cache state, and plays at least one target video in response to the user operation, thereby realizing the pre-cache of the video. With the above scheme, when an instant influx of a large number of clients perform online video on demand, the cached video does not need to be cached from the server, and the local video can be played directly, reducing network pressure and reducing the probability of freezing during video playing, so that the client can watch online video smoothly and clearly.

In some embodiments of the present disclosure, detecting that the target client displays the preset page in step S21 may include:
detecting that the target client displays the preset page within at least one first time period.

In some embodiments of the present disclosure, the first time period may be a preset specific period. For example, the first time period may be a specific period such as a festival, a holiday, or the like. The preset page may be a page made for a video played at a specific time period. For example, the first time period may be a legal holiday, such as New Year's Day, and the preset page may be a page created for a video played on New Year's Day.

The number of at least one may be one, or may be more than one.

In embodiments of the present disclosure, it may be detected whether the target client displays the preset page in at least one first time period, and when it is detected that the target client displays the preset page in at least one first time period, step S21 and subsequent steps may be executed.

As an example, as shown in FIG. 3, clicking "XXX1" and "XXX2" will enter the preset page, and clicking "XXX3" will not enter the preset page.

In some embodiments of the present disclosure, before the target client downloads at least one target video whose caching is not completed according to the video cache state in step S23, a target download bit-rate needs to be determined. In some embodiments of the present disclosure, determining the target download bit-rate may include: determining the target download bit-rate of the target client according to network state information, in which the network state information includes network state information of the target client and network state information of the server. Step S23 may include: the target client downloads at least one target video whose caching is not completed at the target download bit-rate according to the video cache state.

The network state information of the target client may be the network bandwidth of the target client, and the server will determine the network state information (i.e., network status) of the server according to the real-time bandwidth of the server, the number of online users, and the number of new users in real time or regularly, so as to determine the real-time bit-rate. The real-time bit-rate is the highest bit-rate for video downloading and playing determined according to network conditions. The client will periodically obtain the real-time bit-rate of the server from the server, and determine the target download bit-rate according to the network bandwidth of the target client and the real-time bit-rate of the server.

In some embodiments of the present disclosure, determining the target download bit-rate of the target client according to the network state information may include:
in response to the network bandwidth of the target client being greater than or equal to a first preset threshold, and the real-time bit-rate being greater than or equal to the bit-rate of the cached video, determining the real-time bit-rate or the bit-rate of the cached video as the target download bit-rate;
in response to the network bandwidth of the target client being greater than or equal to the first preset threshold, and the real-time bit-rate being less than the bit-rate of the cached video, determining the real-time bit-rate as the target download bit-rate of the target client;
in response to the network bandwidth of the target client being less than the first preset threshold, determining a bit-rate less than the real-time bit-rate as the target download bit-rate of the target client.

In embodiments of the present disclosure, when the network bandwidth of the target client is greater than or equal to the first preset threshold, and the real-time bit-rate is greater than or equal to the bit-rate of the cached video, it means that the network bandwidth of the client and the server is not under pressure, and the bit-rate of the cached video can be determined as the target download bit-rate, to continue to download the video according to the bit-rate of the cached video, or the real-time bit-rate can be determined as the target download bit-rate, and a higher-definition video is downloaded. If the network bandwidth of the target client is greater than or equal to the first preset threshold, but the real-time bit-rate is less than the bit-rate of the cached video, it means that the network bandwidth of the client is not under pressure, and the bandwidth of the server may be under pressure. At this time, it is unable to continue caching video at the previously higher bit-rate of the already cached video, and the video needs to be cached from the server according to the real-time bit-rate, then the real-time bit-rate can be determined as the target download bit-rate. If the network bandwidth of the target client is less than the first preset threshold, it means that the network bandwidth of the client is under pressure, and the bit-rate less than the real-time bit-rate can be determined as the target download bit-rate. According to the actual situation, the bit-rate usually includes 480P, 720P, 1024P, and 1080P. In the case of 720P, the bit-rate less than the real-time bit-rate may be 480P.

In some embodiments of the present disclosure, before the target client downloads at least one target video whose caching is not completed according to the video cache state, the method may further include:
receiving time configuration information sent by the server, wherein the time configuration information is configured to indicate a start time for the target client to download at least one target video whose caching is not completed.

In embodiments of the present disclosure, when it is detected that the target client opens the application APP and enters the application interface, the target client periodically obtains time configuration information from the server, and the time configuration information may include the start time or may be empty. If the target client obtains the time configuration information including the start time, it may cache at least one target video whose caching is not completed according to the time configuration information.

In some embodiments of the present disclosure, the method for video playing may further include: in response to detecting that the target client caches at least one target video associated with the active page at a moment before the first time period, determining the download bit-rate of the target video as the highest bit-rate supported by the client, so that the target client caches the target video with the highest bit-rate supported by the target client.

The first time period is a preset specific period (for example, it may be a period such as a festival), and the preset page is a page made for a video played in a specific period. The time period before the first time period is an inactive period. Usually, the server will not flood a large number of clients instantaneously during the inactive period, so there is no network pressure, and the download can be performed in real time according to the highest bit-rate supported by the target client. For example, before the activity starts, the activity video related to the activity page may have been determined. Before the activity starts, when the user opens the APP, the user can be prompted to cache the activity-related video. After the user agrees, some activity-related videos can be cached before the activity starts for playing at the start of the activity, to improve the smoothness of video playing at the start of the event.

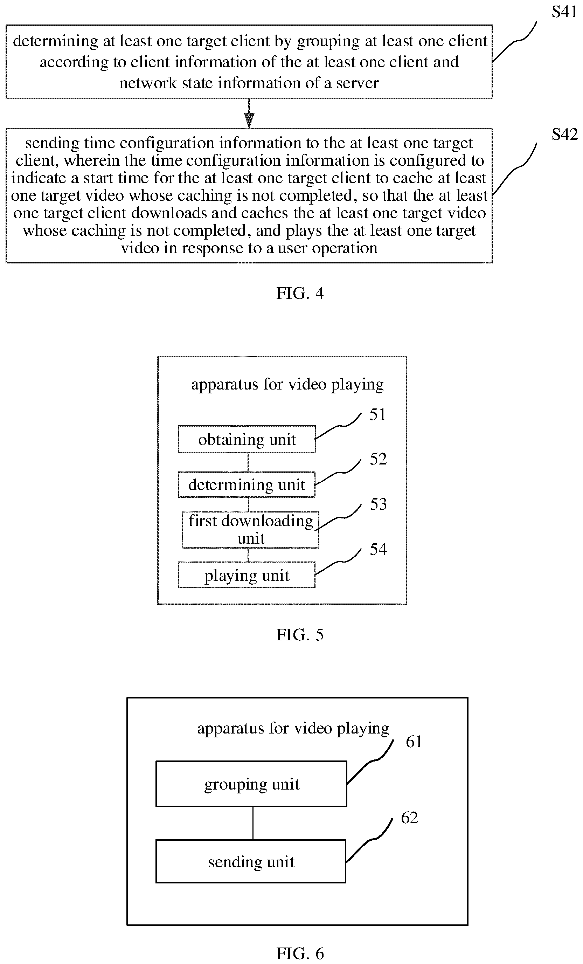

FIG. 4 is a flowchart of a method for video playing according to an exemplary embodiment. As shown in FIG. 2, the method for video playing is applied to the server 120 of FIG. 1 and includes the following steps.

In step S41, at least one client is grouped according to client information of the at least one client and network state information of the server, and at least one target client is determined.

In step S42, time configuration information is sent to the at least one target client, wherein the time configuration information is configured to indicate a start time for the at least one target client to cache at least one target video whose caching is not completed, so that the at least one target client downloads the at least one target video whose caching is not completed according to the time configuration information, and plays the at least one target video in response to a user operation.

In embodiments of the present disclosure, the user operation is an operation triggered by the user, and the user operation is configured to play the target video. For example, the user operation may be a click operation, a sliding operation, a selection operation, etc. triggered by the user.

In embodiments of the present disclosure, when it is detected that the target client opens the application APP and enters the application interface, the target client periodically pulls the time configuration information from the server, and the server also obtains the client information of at least one client pulling the time configuration information and network state information (i.e., real-time bandwidth) of the server, wherein the client information includes the geographic location information (for example, the province where the user is located) and network attributes (for example, the operator network to which the user belongs) of the client. Then, according to the client information of respective clients, respective clients can be firstly grouped, for example, into three groups, the first group - clients of operator A in city A, the second group - clients of operator B in city A, and the third group - clients of operator A in city B. Further, according to the number of clients in each group and the real-time bandwidth of the server, the clients in the group are divided again to obtain the target client group. Optionally, when the real-time bandwidth of the server is less than the preset threshold (the real-time bandwidth less than the preset threshold indicates that the bandwidth pressure is low), no matter the number of clients in the first group is large or small, the first group can be divided into one group. When the real-time bandwidth of the server is greater than the preset threshold (the real-time bandwidth greater than the preset threshold indicates that the server has high bandwidth pressure), then no matter the number of clients in the first group is large or small, the first group may need to be divided into two groups equally, or three groups, etc., so that the client can download at least one target video whose caching is not completed according to the time configuration information. When the client detects the user operation, it can play the above-mentioned downloaded and cached at least one target video in response to the user operation.

It should be understood that although the steps in the flowcharts of FIG. 2 and FIG. 4 are displayed in sequence according to the arrows, these steps are not necessarily executed in the sequence indicated by the arrows. Unless explicitly stated herein, the execution of these steps is not strictly limited to the order, and the steps may be executed in other orders. Moreover, at least a part of the steps in FIG. 2 and FIG. 4 may include multiple steps or multiple stages, and these steps or stages are not necessarily executed at the same time, but may be executed at different times. The order of execution is also not necessarily sequential, but may be performed alternately or in turn with other steps or at least a portion of the steps or stages within the other steps.

FIG. 5 is a block diagram of an apparatus for video playing according to an exemplary embodiment. Referring to FIG. 5, the apparatus may include an obtaining unit, a first determining unit 52, a downloading unit 53 and a playing unit 54.

The obtaining unit 51 is configured to, in response to detecting that a target client displays a preset page, obtain first configuration information of at least one target video associated with the preset page and local cache information of the target client, wherein the first configuration information includes identification information of the target video, and the local cache information of the target client includes identification information of a video that has been cached by the target client.

The first determining unit 52 is configured to determine a video cache state of the target client according to the first configuration information and the local cache information, wherein the video cache state is configured to indicate a cache progress of the at least one target video by the target client.

The downloading unit 53 is configured to download at least one target video whose caching is not completed according to the video cache state.

The playing unit 54 is configured to, in response to a user operation, play the at least one target video.

In an exemplary embodiment, the obtaining unit 51 may be further configured to:
detect that the target client displays the preset page within at least one first time period.

In an exemplary embodiment, the first determining unit 52 may be further configured to:
determine a target download bit-rate of the target client according to network state information, wherein the network state information includes network state information of the target client and network state information of a server.

In an exemplary embodiment, the downloading unit 53 may be specifically configured to:
download at least one target video whose caching is not completed at the target download bit-rate according to the video cache state.

In an exemplary embodiment, the downloading unit 53 may be further configured to:
receive time configuration information sent by a server, wherein the time configuration information is configured to indicate a start time for the target client to download at least one target video whose caching is not completed.

In an exemplary embodiment, the apparatus for video playing may further include:
a second determining unit, configured to, in response to detecting that the target client caches at least one target video associated with the active page at a moment before the first time period, determine that a download bit-rate of the target video is a highest bit-rate supported by the client, so that the target client caches the target video at the highest bit-rate supported by the target client.

In an exemplary embodiment, the network state information of the target client includes a network bandwidth, and the network state information of the server corresponds to a real-time bit-rate.

In an exemplary embodiment, the downloading unit 53 may be further configured to:
in response to the network bandwidth of the target client being greater than or equal to a first preset threshold, and the real-time bit-rate being greater than or equal to a bit-rate of the cached video, determine the real-time bit-rate or the bit-rate of the cached video as the target download bit-rate;
in response to the network bandwidth of the target client being greater than or equal to the first preset threshold, and the real-time bit-rate being less than the bit-rate of the cached video, determine the real-time bit-rate as the target download bit-rate of the target client;
in response to the network bandwidth of the target client being less than the first preset threshold, determine a bit-rate less than the real-time bit-rate as the target download bit-rate of the target client.

FIG. 6 is a block diagram of an apparatus for video playing according to an exemplary embodiment. Referring to FIG. 6, the apparatus may include a grouping unit 61 and a sending unit 62.

The grouping unit 61 is configured to determine at least one target client by grouping at least one client according to client information of the at least one client and network state information of a server.

The sending unit 62 is configured to send time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

Regarding the apparatus in the above embodiments, the specific manner in which each module performs the operation has been described in detail in the embodiments of the method, and will not be described in detail here.

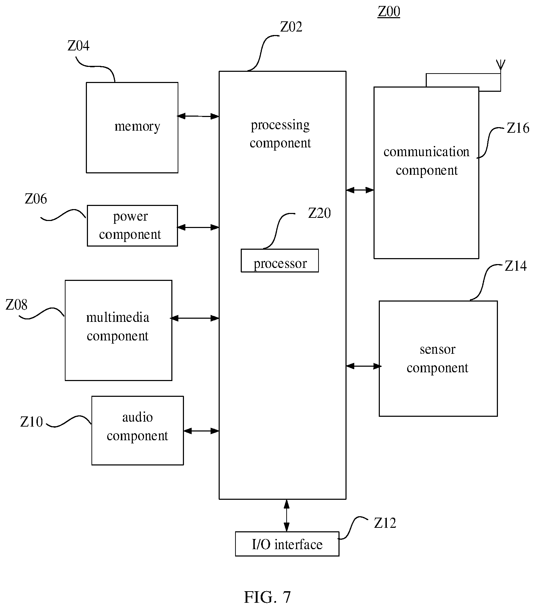

FIG. 7 is a block diagram illustrating an electronic device Z00 according to an example embodiment. The electronic device Z00 may be the client or server in the above embodiment. For example, the electronic device Z00 may be a server, a mobile phone, a computer, a digital broadcasting terminal, a messaging transceiver, a game console, a tablet device, a medical equipment, a fitness equipment, a personal digital assistant, etc.

Referring to FIG. 7, the electronic device Z00 may include one or more of the following components: a processing component Z02, a memory Z04, a power component Z06, a multimedia component Z08, an audio component Z10, an input/ output (I/O) interface Z12, a sensor component Z14 and a communication component Z16.

The processing component Z02 typically controls overall operations of the electronic device Z00, such as the operations associated with display, data communications, telephone call, camera operations, and recording operations. The processing component Z02 may include one or more processors Z20 to execute instructions so as to perform all or part of the steps in the above described methods. Moreover, the processing component Z02 may include one or more modules which facilitate the interaction between the processing component Z02 and other components. For instance, the processing component Z02 may include a multimedia module to facilitate the interaction between the multimedia component Z08 and the processing component Z02.

The memory Z04 is configured to store various types of data to support the operation of the electronic device Z00. Examples of such data include instructions for any applications or methods operated on the electronic device Z00, contact data, phonebook data, messages, pictures, videos, etc. The memory Z04 may be implemented using any type of volatile or non-volatile memory device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component Z06 provides power to various components of the electronic device Z00. The power component Z06 may include a power management system, one or more power sources, and any other components associated with the generation, management, and distribution of power in the electronic device Z00.

The multimedia component Z08 includes a screen providing an output interface between the electronic device Z00 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component Z08 includes a front camera and/or a rear camera. The front camera and/or the rear camera may receive an external multimedia datum while the electronic device Z00 is in an operation mode, such as a photographing mode or a video mode. Each of the front camera and the rear camera may be a fixed optical lens system or have focus and optical zoom capability.

The audio component Z10 is configured to output and/or input an audio signal. For example, the audio component Z10 includes a microphone ("MIC") configured to receive an external audio signal when the electronic device Z00 is in an operation mode, such as a call mode, a recording mode, and a voice recognition mode. The received audio signal may be further stored in the memory Z04 or transmitted via the communication component Z16. In some embodiments, the audio component Z10 further includes a speaker to output audio signals.

The I/O interface Z12 provides an interface between the processing component Z02 and peripheral interface modules, such as a keyboard, a click wheel, buttons, and the like. The buttons may include, but are not limited to, a home button, a volume button, a starting button, and a locking button.

The sensor component Z14 includes one or more sensors to provide status assessments of various aspects of the electronic device Z00. For instance, the sensor component Z14 may detect an opened/closed status of the electronic device Z00, relative positioning of components (e.g., the display and the keypad) of the electronic device Z00, a change in position of the electronic device Z00 or a component of the electronic device Z00, a presence or absence of user contact with the electronic device Z00, an orientation or an acceleration/deceleration of the electronic device Z00, and a change in temperature of the electronic device Z00. The sensor component Z14 may include a proximity sensor configured to detect the presence of nearby objects without any physical contact. The sensor component Z14 may also include a light sensor, such as a CMOS or CCD image sensor, for use in imaging applications. In some embodiments, the sensor component Z14 may also include an accelerometer sensor, a gyroscope sensor, a magnetic sensor, a pressure sensor, or a temperature sensor.

The communication component Z16 is configured to facilitate wired or wireless communication between the electronic device Z00 and other apparatus. The electronic device Z00 can access a wireless network based on a communication standard, such as WiFi, 2G, or 3G, or a combination thereof. In one exemplary embodiment, the communication component Z16 receives a broadcast signal or broadcast associated information from an external broadcast management system via a broadcast channel. In one exemplary embodiment, the communication component Z16 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device Z00 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

Some embodiments of the present disclosure provide an electronic device, including a processor; and a memory configured to store instructions executable by the processor. The processor is configured to execute the instructions, so as to implement steps of:
in response to detecting that a target client displays a preset page, obtaining first configuration information of at least one target video associated with the preset page and local cache information of the target client, wherein the first configuration information includes identification information of the target video, and the local cache information of the target client includes identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

In some embodiments of the present disclosure, the processor may be configured to further implement following steps when executing the instructions:
detecting that the target client displays the preset page within at least one first time period.

In some embodiments of the present disclosure, the processor may be configured to further implement following steps when executing the instructions:
determining a target download bit-rate of the target client according to network state information, wherein the network state information includes network state information of the target client and network state information of a server;
wherein downloading at least one target video whose caching is not completed according to the video cache state includes:
   downloading at least one target video whose caching is not completed at the target download bit-rate according to the video cache state.

In some embodiments of the present disclosure, the processor may be configured to further implement following steps when executing the instructions:
receiving time configuration information sent by a server, wherein the time configuration information is configured to indicate a start time for the target client to download at least one target video whose caching is not completed.

In some embodiments of the present disclosure, the processor may be configured to further implement following steps when executing the instructions:
in response to detecting that the target client caches at least one target video associated with the active page at a moment before the first time period, determining that a download bit-rate of the target video is a highest bit-rate supported by the client, so that the target client caches the target video at the highest bit-rate supported by the target client.

In some embodiments of the present disclosure, the processor may be configured to further implement following steps when executing the instructions:
the network state information of the target client includes a network bandwidth, and the network state information of the server corresponds to a real-time bit-rate;
in response to the network bandwidth of the target client being greater than or equal to a first preset threshold, and the real-time bit-rate being greater than or equal to a bit-rate of the cached video, determining the real-time bit-rate or the bit-rate of the cached video as the target download bit-rate;
in response to the network bandwidth of the target client being greater than or equal to the first preset threshold, and the real-time bit-rate being less than the bit-rate of the cached video, determining the real-time bit-rate as the target download bit-rate of the target client;
in response to the network bandwidth of the target client being less than the first preset threshold, determining a bit-rate less than the real-time bit-rate as the target download bit-rate of the target client.

Some embodiments of the present disclosure provide an electronic device, including a processor and a memory configured to store instructions executable by the processor. The processor is configured to execute the instructions, to implement following steps of:
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

In some embodiments of the present disclosure, a storage medium is provided. When instructions in the storage medium are executed by a processor of an electronic device, the electronic device is enabled to implement following steps of:
in response to detecting that a target client displays a preset page, obtaining first configuration information of at least one target video associated with the preset page and local cache information of the target client, wherein the first configuration information includes identification information of the target video, and the local cache information of the target client includes identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

In some embodiments of the present disclosure, a storage medium is provided. When instructions in the storage medium are executed by a processor of an electronic device, the electronic device is enabled to implement following steps of:
detecting that the target client displays the preset page within at least one first time period.

In some embodiments of the present disclosure, a storage medium is provided. When instructions in the storage medium are executed by a processor of an electronic device, the electronic device is further enabled to implement following steps of:
determining a target download bit-rate of the target client according to network state information, wherein the network state information includes network state information of the target client and network state information of a server;
wherein downloading at least one target video whose caching is not completed according to the video cache state includes:
   downloading at least one target video whose caching is not completed at the target download bit-rate according to the video cache state.

In some embodiments of the present disclosure, a storage medium is provided. When instructions in the storage medium are executed by a processor of an electronic device, the electronic device is further enabled to implement following steps of:
receiving time configuration information sent by a server, wherein the time configuration information is configured to indicate a start time for the target client to download at least one target video whose caching is not completed.

In some embodiments of the present disclosure, a storage medium is provided. When instructions in the storage medium are executed by a processor of an electronic device, the electronic device is further enabled to implement following steps of:
in response to detecting that the target client caches at least one target video associated with the active page at a moment before the first time period, determining that a download bit-rate of the target video is a highest bit-rate supported by the client, so that the target client caches the target video at the highest bit-rate supported by the target client.

In some embodiments of the present disclosure, a storage medium is provided. When instructions in the storage medium are executed by a processor of an electronic device, the electronic device is further enabled to implement following steps:
the network state information of the target client includes a network bandwidth, and the network state information of the server corresponds to a real-time bit-rate;
in response to the network bandwidth of the target client being greater than or equal to a first preset threshold, and the real-time bit-rate being greater than or equal to a bit-rate of the cached video, determining the real-time bit-rate or the bit-rate of the cached video as the target download bit-rate;
in response to the network bandwidth of the target client being greater than or equal to the first preset threshold, and the real-time bit-rate being less than the bit-rate of the cached video, determining the real-time bit-rate as the target download bit-rate of the target client;
in response to the network bandwidth of the target client being less than the first preset threshold, determining a bit-rate less than the real-time bit-rate as the target download bit-rate of the target client.

In some embodiments of the present disclosure, a storage medium is provided. When instructions in the storage medium are executed by a processor of an electronic device, the electronic device is enabled to implement following steps of
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

Those of ordinary skill in the art can understand that all or part of the processes in the methods of the above embodiments can be implemented by instructing relevant hardware through a computer program, and the computer program can be stored in a non-volatile computer-readable storage medium. When the computer program is executed, it may include the processes of the above-mentioned method embodiments. Any reference to memory, storage, database, or other medium used in the various embodiments provided in this disclosure may include non-volatile and/or volatile memory. Nonvolatile memory may include read only memory (ROM), programmable ROM (PROM), electrically programmable ROM (EPROM), electrically erasable programmable ROM (EEPROM), or flash memory. Volatile memory may include random access memory (RAM) or external cache memory. By way of illustration and not limitation, RAM is available in various forms such as static RAM (SRAM), dynamic RAM (DRAM), synchronous DRAM (SDRAM), double data rate SDRAM (DDRSDRAM), enhanced SDRAM (ESDRAM), synchronous chain Road (Synchlink) DRAM (SLDRAM), memory bus (Rambus) direct RAM (RDRAM), direct memory bus dynamic RAM (DRDRAM), and memory bus dynamic RAM (RDRAM) and so on.

The technical features of the above embodiments can be combined arbitrarily. For the sake of brevity, all possible combinations of the technical features in the above embodiments are not described. However, as long as there is no contradiction in the combination of these technical features, all is considered to be the range described in this specification.

The above-mentioned embodiments only represent several embodiments of the present disclosure, and the descriptions thereof are specific and detailed, but should not be construed as limiting the scope of the invention. It should be noted that, for those skilled in the art, without departing from the concept of the present disclosure, several modifications and improvements can be made, which all belong to the protection scope of the present disclosure. Accordingly, the scope of protection of the present disclosure should be determined by the appended claims.

## Claims

1. A method for video playing, comprising:
in response to detecting that a target client displays a preset page, obtaining first configuration information of at least one target video associated with the preset page and local cache information of the target client, wherein the first configuration information comprises identification information of the target video, and the local cache information of the target client comprises identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

2. The method according to claim 1, wherein said detecting that the target client displays the preset page comprises:
detecting that the target client displays the preset page within at least one first time period.

3. The method according to claim 2, further comprising:
determining a target download bit-rate of the target client according to network state information, wherein the network state information comprises network state information of the target client and network state information of a server;
wherein downloading at least one target video whose caching is not completed according to the video cache state comprises:
downloading at least one target video whose caching is not completed at the target download bit-rate according to the video cache state.

4. The method according to claim 2 or 3, further comprising:
receiving time configuration information sent by a server, wherein the time configuration information is configured to indicate a start time for the target client to download at least one target video whose caching is not completed.

5. The method according to claim 1, further comprising:
in response to detecting that the target client caches at least one target video associated with the active page at a moment before the first time period, determining that a download bit-rate of the target video is a highest bit-rate supported by the client, so that the target client caches the target video at the highest bit-rate supported by the target client.

6. The method according to claim 3, wherein the network state information of the target client comprises a network bandwidth, and the network state information of the server corresponds to a real-time bit-rate;
determining the target download bit-rate of the target client according to the network state information comprises:
in response to the network bandwidth of the target client being greater than or equal to a first preset threshold, and the real-time bit-rate being greater than or equal to a bit-rate of the cached video, determining the real-time bit-rate or the bit-rate of the cached video as the target download bit-rate;
in response to the network bandwidth of the target client being greater than or equal to the first preset threshold, and the real-time bit-rate being less than the bit-rate of the cached video, determining the real-time bit-rate as the target download bit-rate of the target client;
in response to the network bandwidth of the target client being less than the first preset threshold, determining a bit-rate less than the real-time bit-rate as the target download bit-rate of the target client.

7. A method for video playing, comprising:
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

8. An apparatus for video playing, comprising:
an obtaining unit, configured to, in response to detecting that a target client displays a preset page, obtain first configuration information of at least one target video associated with the preset page and local cache information of the target client, wherein the first configuration information comprises identification information of the target video, and the local cache information of the target client comprises identification information of a video that has been cached by the target client;
a first determining unit, configured to determine a video cache state of the target client according to the first configuration information and the local cache information, wherein the video cache state is configured to indicate a cache progress of the at least one target video by the target client;
a downloading unit, configured to download at least one target video whose caching is not completed according to the video cache state;
a playing unit, configured to, in response to a user operation, play the at least one target video.

9. The apparatus according to claim 8, wherein the obtaining unit is further configured to:
detect that the target client displays the preset page within at least one first time period.

10. The apparatus according to claim 9, wherein the first determining unit is further configured to:
determine a target download bit-rate of the target client according to network state information, wherein the network state information comprises network state information of the target client and network state information of a server;
wherein the downloading unit is specifically configured to:
download at least one target video whose caching is not completed at the target download bit-rate according to the video cache state.

11. The apparatus according to claim 9 or 10, wherein the downloading unit is further configured to:
receive time configuration information sent by a server, wherein the time configuration information is configured to indicate a start time for the target client to download at least one target video whose caching is not completed.

12. The apparatus according to claim 8, further comprising:
a second determining unit, configured to, in response to detecting that the target client caches at least one target video associated with the active page at a moment before the first time period, determine that a download bit-rate of the target video is a highest bit-rate supported by the client, so that the target client caches the target video at the highest bit-rate supported by the target client.

13. The apparatus according to claim 10, wherein the network state information of the target client comprises a network bandwidth, and the network state information of the server corresponds to a real-time bit-rate;
the downloading unit is further configured to:
in response to the network bandwidth of the target client being greater than or equal to a first preset threshold, and the real-time bit-rate being greater than or equal to a bit-rate of the cached video, determine the real-time bit-rate or the bit-rate of the cached video as the target download bit-rate;
in response to the network bandwidth of the target client being greater than or equal to the first preset threshold, and the real-time bit-rate being less than the bit-rate of the cached video, determine the real-time bit-rate as the target download bit-rate of the target client;
in response to the network bandwidth of the target client being less than the first preset threshold, determine a bit-rate less than the real-time bit-rate as the target download bit-rate of the target client.

14. An apparatus for video playing, comprising:
a grouping unit, configured to determine at least one target client by grouping at least one client according to client information of the at least one client and network state information of a server;
a sending unit, configured to send time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

15. A client, comprising:
a processor; and
a memory, configured to store instructions executable by the processor,
wherein the processor is configured to execute the instructions, to implement steps of:
in response to detecting that a target client displays a preset page, obtaining first configuration information of at least one target video associated with the preset page and local cache information of the target client, wherein the first configuration information comprises identification information of the target video, and the local cache information of the target client comprises identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

16. A server, comprising:
a processor; and
a memory, configured to store instructions executable by the processor,
wherein the processor is configured to execute the instructions, to implement steps of:
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.

17. A storage medium, wherein when instructions in the storage medium are executed by a processor of a client, the client is enabled to implement steps of:
in response to detecting that a target client displays a preset page, obtaining first configuration information of at least one target video associated with the preset page and local cache information of the target client, wherein the first configuration information comprises identification information of the target video, and the local cache information of the target client comprises identification information of a video that has been cached by the target client;
determining a video cache state of the target client according to the first configuration information and the local cache information, wherein the video cache state is configured to indicate a cache progress of the at least one target video by the target client;
downloading at least one target video whose caching is not completed according to the video cache state;
in response to a user operation, playing the at least one target video.

18. A storage medium, wherein when instructions in the storage medium are executed by a processor of a server, the server is enabled to implement steps of:
determining at least one target client by grouping at least one client according to client information of the at least one client and network state information of a server;
sending time configuration information to the at least one target client, wherein the time configuration information is configured to indicate a start time for the at least one target client to cache at least one target video whose caching is not completed, so that the at least one target client downloads and caches the at least one target video whose caching is not completed, and plays the at least one target video in response to a user operation.
